# EUROPEAN PATENT APPLICATION

(11) **EP 4 836 291 A1**
(43) Date of publication of application: **04.11.2026**
(21) Application number: 26175290.1
(22) Date of filing: 29.04.2026
(51) Int. Cl.: H02S 20/23

(54) **MOUNTING BASE FOR A SOLAR PANEL, SOLAR PANEL SYSTEM, AND ROOF STRUCTURE**

(30) Priority: 30.04.2025 FI 20253167
(71) Applicant: FF-Future Oy, 24100 Salo (FI)
(72) Inventor: NIEMINEN, Henri, 24130 Salo (FI); SIMOLA, Jarmo, 20100 Turku (FI)
(74) Representative: Berggren Oy

(57) **Abstract**

A mounting base for solar panels, made of a thermal insulation material and comprising a first inclined outer surface, a second inclined outer surface, a bottom surface, and side surfaces connecting said surfaces, wherein the first inclined outer surface and the second inclined outer surface are tilted towards each other, and wherein at least one of the two inclined outer surfaces constitutes a mounting base for solar panels. Further, at least the first inclined outer surface and the second inclined outer surface of the mounting base are coated with a surface layer comprising metal, and a support mesh and an adhesive comprising a fire retardant are provided between the surface layer comprising metal and the thermal insulation material. The mounting bases are used for forming a base structure for a solar panel system.

## Description

### Field of the invention

The invention relates to a mounting base according to the appended independent claim for a solar panel, as well as a solar panel system and a roof structure comprising mounting bases according to the invention for solar panels.

### Background of the invention

When installing solar panels, their arrangement and orientation have a significant effect on the production of electricity by the solar panels. When installed on a roof, the solar panels are typically installed parallel to the roof surface, which is not necessarily the most optimal angle of tilt for the solar panels. Thus, a disadvantage is that part of the solar energy remains unexploited since the angle of the solar panels is not optimal with respect to the sun.

When installing solar panels, mount racks may be used, by which the angle of tilt can be changed. These are typically used, for example, when solar panels are installed on flat roofs or directly on the ground. Separate mount racks are typically racks which are made of metal and whose installation is time consuming.

Prior patent publication FI 20225489 A1 discloses a mounting base made of thermal insulation material for solar panels, and a solar panel system formed of these mounting bases, to enable good electrical output of solar panels, irrespective of the angle of tilt of the solar panels. In the mounting base disclosed herein, a first inclined surface constitutes a mounting base for a solar panel, and a second inclined surface is at least partly coated with a reflective coating.

### Object and description of the invention

It is an aim of the present invention to disclose a mounting base made of thermal insulation material for a solar panel or solar panels, whereby the fire safety of the mounting base is improved. The mounting base according to the invention is a rack for a solar panel, on which the solar panel is easy to install.

It is also an aim of the invention to present a solar panel system comprising mounting bases according to the invention.

Yet another aim of the invention is to present a mounting base for a solar panel or solar panels, which also enables supplementary thermal insulation of the roof structure, in addition to the easy mounting and optimal output of the solar panels.

To achieve these aims, the mounting base for a solar panel, the solar panel system and the roof structure according to the invention are primarily characterized in what will be presented in the appended independent claims.

The dependent claims present some preferred embodiments of the invention.

A typical mounting base for a solar panel according to the invention is made of a thermal insulation material and comprises a first inclined outer surface, a second inclined outer surface, a bottom surface, and side surfaces connecting said surfaces, wherein the first inclined outer surface and the second inclined outer surface are tilted towards each other, and wherein at least one of the two inclined outer surfaces constitutes a base for installing a solar panel. Further, in the mounting base for a solar panel according to the invention, at least the first inclined outer surface and the second inclined outer surface of the mounting base are coated with a surface layer comprising metal, and a support mesh and adhesive which comprises fire retardant comprising expandable graphite are arranged between the surface layer comprising metal and the thermal insulation material.

A typical solar panel system according to the invention comprises
- a base structure formed of mounting bases according to the invention by arranging mounting bases next to each other in the longitudinal direction of the base structure and/or one after another in the width direction of the base structure, and
- solar panels arranged on at least part of the inclined outer surfaces of the mounting bases.

The solar panel system according to the invention is typically used on a roof of a building. Consequently, a typical roof structure according to the invention comprises
- a roof surface and
- a solar panel system according to the invention arranged on the roof surface.

The mounting base according to the invention for a solar panel makes possible to improve the fire safety of the base structure made of a thermal insulation material. The mounting base is made of a thermal insulation material, such as expanded polystyrene, which may melt and its structure may thus collapse in the event of fire. However, the thermal insulation material is an ideal material for the base structure, because it enables easy installation and supplementary insulation of the roof structure at the same time. Now, the fire resistance of the mounting base made of a thermal insulation material is improved by providing the thermal insulation material with a coating comprising metal, at least on the inclined outer surfaces forming the top surface of the mounting base, and further by providing a support mesh and adhesive comprising fire retardant between the surface layer comprising metal and the thermal insulation material. The surface layer, the support mesh, and the adhesive comprising fire retardant will hold the structure together in the event of fire even if the thermal insulation material melted. The adhesive layer formed of the adhesive comprising fire retardant also protects the thermal insulation material in the event of fire, because the adhesive contains expandable graphite that swells in the event of fire. The function of the support mesh is to make sure that the adhesive layer remains in place and thereby protects the thermal insulation material in the event of fire.

When mounting bases according to the invention are arranged next to each other and/or one after the other, a base structure can be formed for solar panels. In a typical embodiment of the invention, the solar panel system according to the invention is installed on the roof of a building, whereby the mounting base according to the invention, made of a thermal insulation material, also enables supplementary thermal insulation of the roof structure. The mounting base according to the invention constitutes a so-called inverted roof structure and simultaneously protects the waterproofing layer of the building when the thermal insulation layer is formed on top of it. The base structure according to the invention can be used to constitute the roof structure in new buildings as well.

### Brief description of the drawings

Figure 1 shows a mounting base according to an embodiment of the invention in a side view, and a solar panel mounted on a first inclined outer surface of the mounting base.
Figure 2 shows a mounting base according to another embodiment of the invention in a side view, where solar panels are mounted on a first inclined outer surface and a second inclined outer surface of the mounting base.
Figure 3 shows a mounting base according to another embodiment of the invention in a side view, and a solar panel mounted on a first inclined outer surface of the mounting base.

### Detailed description of the invention

The mounting base according to the invention for a solar panel is made of a thermal insulation material. Typically, the thermal insulation material comprises expanded polystyrene (EPS), extruded polystyrene (XPS), polyurethane (PIR/PUR), or polyphenol. Thus, the mounting base according to the invention is made of expanded polystyrene (EPS), extruded polystyrene (XPS), polyurethane (PIR/PUR), polyphenol, or another corresponding thermal insulation material. Thus, the mounting base according to the invention has a light structure and is inexpensive and easy to manufacture. In a preferred embodiment of the invention, the thermal insulation material comprises expanded polystyrene (EPS), wherein the mounting base is made of expanded polystyrene (EPS).

The mounting base according to the invention for a solar panel comprises a first inclined outer surface, a second inclined outer surface, a bottom surface, and side surfaces connecting said surfaces, and the first inclined outer surface and the second inclined outer surface of the mounting base are tilted towards each other. The first inclined outer surface and the second inclined outer surface thus constitute opposite top surfaces of the mounting base. The bottom surface of the mounting base extends along the span between the inclined outer surfaces, and seen from the opposite outer edges of the bottom surface, the inclined outer surfaces are tilted towards each other. In a mounting base according to an embodiment of the invention, the inclined outer surfaces are at an angle of about 20 to 70 degrees to the bottom surface. The mounting base according to the invention is easy to make with various angles, and the mounting base can thus be made with angles of tilt required for the use. In an embodiment of the invention, the first and second inclined outer surfaces are at the same angle to the bottom surface. Typically, the side surfaces of the mounting base are substantially perpendicular to the bottom surface.

The mounting base according to the invention comprises two inclined outer surfaces which are tilted towards each other A solar panel can be installed on at least one of the two inclined outer/top surfaces constituting the top surface of the mounting base. In some cases, solar panels can be installed on both inclined outer surfaces, depending on the use.

In a typical embodiment of the invention, the bottom surface of the mounting base is flat. In an embodiment of the invention, the angles between the bottom surface and the first inclined outer surface as well as between the bottom surface and the second inclined outer surface of the mounting base are sharp. Thus, in an embodiment of the invention, the cross-section of the mounting base is a triangle, seen from the direction of the side surface of the mounting platform, wherein the sides of the triangle are formed by the first inclined outer surface, the second inclined outer surface, and the bottom surface. In the top part of the mounting base, a short flat top surface may be provided between the first inclined outer surface and the second inclined outer surface, but the mounting base according to the invention may be formed in such a way that the first inclined outer surface and the second inclined outer surface are joined at the top part of the mounting base. In another embodiment of the invention, a part for example substantially perpendicular to the bottom surface, i.e. a so-called end side surface, is provided between the bottom surface and the first inclined outer surface and between the bottom surface and the second inclined outer surface. Thus, the mounting base only has a triangular cross section, seen from the side surface of the mounting base, in the top part of the mounting base where the first inclined outer surface and the second inclined outer surface are tilted towards each other. In this above-mentioned case, too, the top part of the mounting base may have a flat surface between the inclined surfaces. Thus, the cross-section of the mounting base according to the invention may vary. For example, a short straight section from the bottom part upwards before the inclination of the outer/top surfaces, i.e. an end side surface, may facilitate the arrangement of the mounting bases against each other in the base structure for the solar panel system. This section in the mounting base may comprise, for example, designs which allow the mounting bases to be placed tightly against each other.

In a preferred embodiment of the invention, the mounting base is a single uniform piece made of a thermal insulation material. In a typical embodiment, the mounting base is a solid piece made of a thermal insulation material. In another embodiment according to the invention, the thermal insulation material of the mounting base is formed of two or more parts placed against each other, thus constituting a uniform solid piece.

The dimensions of the mounting base according to the invention can be selected to be suitable for the purpose. The size of the first and second inclined outer surfaces may vary, and the lengths of the sides can be freely dimensioned, depending on the use.

In a mounting base according to the invention, at least the first inclined outer surface and the second inclined outer surface are coated with a surface layer that comprises a metal. Thus, the top surface of the mounting base, including a possible flat top surface between the inclined outer surfaces, is coated with a surface layer that comprises a metal. Further, the side surface or side surfaces as well as possible end side surfaces of the mounting base, forming the outer surface of a base structure formed of mounting bases, are coated with a surface layer that comprises a metal. In an embodiment according to the invention, at least one side surface of the mounting base is coated with a surface layer comprising metal, and a support mesh and an adhesive that comprises fire retardant are arranged between the surface layer comprising metal and the thermal insulation material. The bottom surface of the mounting base is typically not coated, but in some cases all the surfaces of the mounting base may be coated as well. Typically, the surface layer comprising metal is a metal sheet having a thickness of 0.05 to 0.5 mm, most preferably 0.05 to 0.2 mm or 0.05 to 0.15 mm. In an embodiment of the invention, the metal sheet is made of aluminum, coated steel or stainless steel.

In the mounting base according to the invention, an adhesive that comprises fire retardant, and a support mesh are arranged between the surface layer comprising metal and the thermal insulation material. The support mesh may be a steel mesh or another metal mesh, or a glass fiber mesh. In an embodiment according to the invention, the mesh size of the support mesh is 5 to 30 mm.

The adhesive used in the mounting base according to the invention comprises a fire retardant comprising expandable graphite. The expandable graphite in the adhesive acts as a fire retardant which expands in the event of fire. The adhesive comprising the fire retardant may be any adhesive or other fastening agent which is suitable for the purpose and is blended with expandable graphite, and which enables the fastening of the surface layer and the support mesh to the thermal insulation material. Typically, the support mesh is on the surface of the thermal insulation material, and the adhesive which comprises the fire retardant is arranged at least between the support mesh and the surface layer. In a preferred embodiment of the invention, the support mesh is within an adhesive layer formed of the adhesive comprising the fire retardant. The support mesh within the adhesive layer keeps the expandable adhesive layer in place and, simultaneously, the adhesive layer protects the support mesh structure in the event of fire. The adhesive layer having a sufficient thickness, together with the support mesh, thus protects the thermal insulation material in the event of fire and makes it possible for the structure to remain together. In an embodiment of the invention, the adhesive layer formed of an adhesive comprising fire retardant has a thickness of 1 to 5 mm. In a preferred embodiment of the invention, the adhesive layer has a thickness of 1 to 5 mm and the support mesh is within the adhesive layer comprising the fire retardant. Adhesive comprising fire retardant, and support mesh, are arranged substantially over the whole surface area between the surface layer and the thermal insulation material.

The solar panel system according to the invention comprises a base structure formed of mounting bases according to the invention. In a base structure according to the invention, mounting bases are arranged next to each other in the longitudinal direction of the base structure and/or one after the other in the width direction of the base structure. In a typical embodiment, the longitudinal direction of the base structure is the longitudinal direction of the inclined surface of the roof structure, and the width direction is the width direction of the inclined surface of the roof structure. In a solar panel system according to the invention, solar panels are arranged on at least one of the two inclined upper surfaces of the mounting bases. In a solar panel system according to the invention, one solar panel is arranged in the area of two adjacent mounting bases, on the first inclined outer surfaces of the mounting bases. However, the dimensions of the mounting bases may vary. Solar panels may be arranged on both of the inclined outer surfaces of the mounting bases.

In a solar panel system according to the invention, at least those surfaces of the mounting bases which constitute the outer surface of the base structure are coated with a surface layer comprising metal, and on these surfaces, a support mesh and an adhesive comprising fire retardant are arranged between the surface layer and the thermal insulation material of the mounting bases. Thus, the side surfaces as well as possible side end surfaces of the mounting bases at the edges of the base structure, forming the outer surface of the base structure, are coated with the surface layer comprising metal.

The solar panel system according to the invention is typically used on a roof of a building. Thus, a typical roof structure according to the invention comprises a roof surface and a solar panel system according to the invention arranged on the roof surface. The shape, the structure or the surface materials of the roof structure do not restrict the use of the mounting base according to the invention.

### Detailed description of the drawings

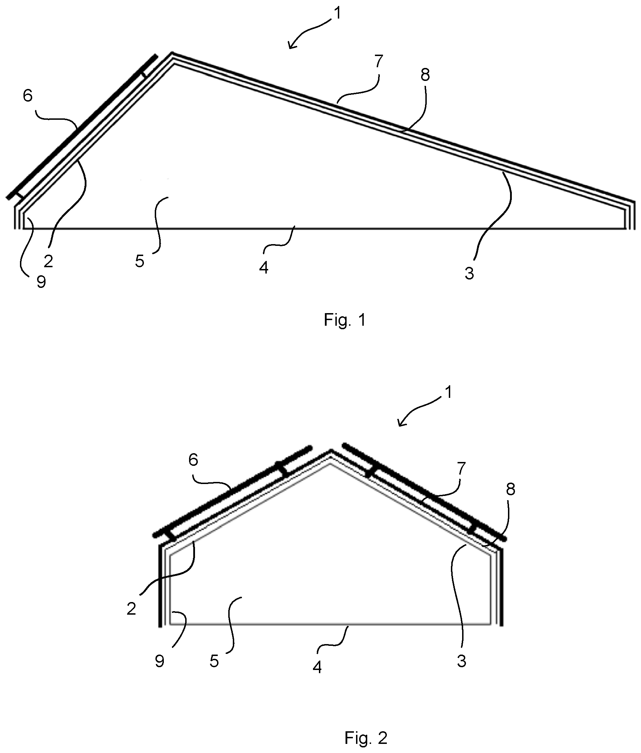

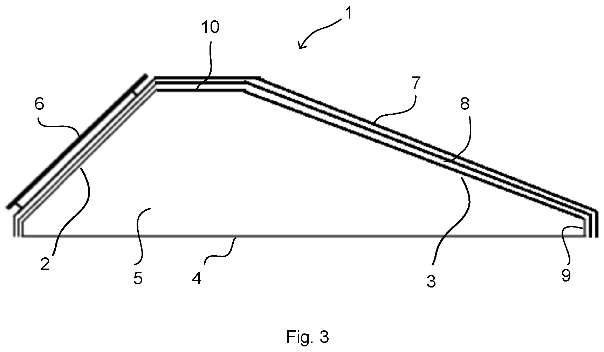

Figure 1 shows a mounting base 1 according to an embodiment of the invention in a schematic side view. Figures 2 and 3 show mounting bases 1 according to another embodiment of the invention in schematic side views.

The mounting bases 1 according to the invention for solar panels, shown in Figs. 1 to 3, are made of a thermal insulation material and comprise a first inclined outer surface 2, a second inclined outer surface 2, a bottom surface 4, and side surfaces 5 connecting said surfaces. The first inclined outer surface 2 and the second inclined outer surface 3 in the mounting base 1 are tilted towards each other. The first inclined outer surface 2 and the second inclined outer surface 3 thus constitute the opposite top surfaces of the mounting base. The bottom surface 4 of the mounting base extends along the span between the inclined surfaces, and seen from the opposite outer edges of the bottom surface 4, the inclined outer surfaces 2, 3 are tilted towards each other. Typically, the side surfaces 5 of the mounting base are substantially perpendicular to the bottom surface. A part perpendicular to the bottom surface, i.e. a so-called end side surface 9, is provided between the bottom surface 4 and the first inclined outer surface 2 and between the bottom surface 4 and the second inclined outer surface 3 in the mounting bases shown in the figures. Further, Fig. 3 shows that a flat top surface 10 may be provided between the first inclined outer surface 2 and the second inclined outer surface 3.

In the mounting base 1, at least one of the two inclined outer surfaces constitutes a mounting base for a solar panel 6. In Figs. 1 and 3, a solar panel 6 is mounted on the first inclined outer surface 2 of the mounting base 1, and in Fig. 2, solar panels 6 are mounted on the first inclined outer surface 1 and the second inclined outer surface 3.

At least the first inclined outer surface 2 and the second inclined outer surface 3 as well as the end side surfaces 9 of the mounting base 1 are coated with a surface layer 7 comprising metal, and a support mesh 8 and adhesive comprising fire retardant are arranged between the surface layer 7 comprising metal and the thermal insulation material (not shown separately in the figure). Further, the side surface 5 of the mounting base 1 may be coated with a surface layer comprising a metal, whereby a support mesh and adhesive comprising fire retardant are arranged between the surface layer comprising metal and the thermal insulation material.

## Claims

1. A mounting base (1) for a solar panel, wherein the mounting base (1) is made of a thermal insulation material and comprises a first inclined outer surface (2), a second inclined outer surface (3), a bottom surface (4), and side surfaces (5) connecting said surfaces, wherein the first inclined outer surface (2) and the second inclined outer surface (3) are tilted towards each other, and wherein at least one of the two inclined outer surfaces (2, 3) constitutes a mounting base for a solar panel (6), **characterized in that** at least the first inclined outer surface (2) and the second inclined outer surface (3) are coated with a surface layer (7) comprising metal, and a support mesh (8) and adhesive which comprises fire retardant comprising expandable graphite are arranged between the surface layer comprising metal (7) and the thermal insulation layer.

2. The mounting base according to claim 1, **characterized in that** the mounting base (1) is a single uniform piece formed of a thermal insulation material.

3. The mounting base according to claim 1, **characterized in that** the thermal insulation material comprises expanded polystyrene (EPS), extruded polystyrene (XPS), polyurethane (PIR/PUR), or polyphenol; preferably, the thermal insulation material comprises expanded polystyrene (EPS).

4. The mounting base according to any of the preceding claims, **characterized in that** at least one side surface (5) is coated with a surface layer (7) comprising metal, and a support mesh (8) and an adhesive which comprises fire retardant comprising expandable graphite are arranged between the surface layer (7) comprising metal and the thermal insulation material.

5. The mounting base according to any of the preceding claims, **characterized in that** the surface layer comprising metal is a metal sheet having a thickness of 0.05 to 0.5 mm, most preferably 0.05 to 0.2 mm or 0.05 to 0.15 mm.

6. The mounting base according to claim 5, **characterized in that** the metal sheet is made of aluminum, coated steel, or stainless steel.

7. The mounting base according to any of the preceding claims, **characterized in that** the support mesh (8) is a steel mesh or another metal mesh, or a glass fiber mesh.

8. The mounting base according to any of the preceding claims, **characterized in that** the support mesh (8) is within an adhesive layer formed of the adhesive comprising fire retardant.

9. The mounting base according to any of the preceding claims, **characterized in that** the adhesive layer formed of the adhesive comprising fire retardant has a thickness of 1 to 5 mm.

10. The mounting base according to any of the preceding claims, **characterized in that** the first inclined outer surface (2) and the second inclined outer surface (3) of the mounting base are at an angle of approximately 20 to 70 degrees to the bottom surface (4).

11. A solar panel system, **characterized in that** the solar panel system comprises
- a base structure formed of mounting bases according to any of the claims 1 to 10 by arranging mounting bases next to each other in the length direction of the base structure and/or one after another in the width direction of the base structure, and
- solar panels (6) arranged on at least part of the inclined outer surfaces (2, 3) of the mounting bases.

12. A solar panel system according to claim 11, **characterized in that** the side surfaces (5) of the mounting bases at the edges of the base structure, forming the outer surface of the base structure, are coated with a surface layer (7) comprising a metal.

13. A roof structure, **characterized in that** the roof structure comprises
- a roof surface and
- a solar panel system according to claim 11 or 12 arranged on the roof surface.
